(19) Europäisches Patentamt
European Patent Office
Office européen des brevets

(11) **EP 2 034 471 B1**

(12) **EUROPÄISCHE PATENTSCHRIFT**

(45) Veröffentlichungstag und Bekanntmachung des Hinweises auf die Patenterteilung:
**30.01.2019 Patentblatt 2019/05**

(51) Int Cl.:
***G10K 11/02*** *(2006.01)*

(21) Anmeldenummer: **08015585.6**

(22) Anmeldetag: **04.09.2008**

(54) **Ultraschallsonde**

Ultrasound probe

Sonde à ultrasons

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **10.09.2007 DE 102007042663**

(43) Veröffentlichungstag der Anmeldung:
**11.03.2009 Patentblatt 2009/11**

(73) Patentinhaber: **Krohne AG**
**4019 Basel (CH)**

(72) Erfinder:
 • **van Bekkum, Aart Jan**
 **4223 MG**
 **Hoornaar (NL)**

• **van Klooster, Jeoren Martin**
 **4003 DJ**
 **Tiel (NL)**

(74) Vertreter: **Gesthuysen Patent- und Rechtsanwälte**
**Patentanwälte**
**Postfach 10 13 54**
**45013 Essen (DE)**

(56) Entgegenhaltungen:
**EP-A2- 0 031 049 EP-A2- 0 198 731**
**DE-A1- 10 055 893 DE-U1- 9 015 615**
**US-A- 5 747 672**

**Beschreibung**

Die Erfindung betrifft eine Ultraschallsonde, insbesondere für einen Ultraschalldurchflußmesser, mit einem Gehäuse und einem in dem Gehäuse angeordneten Ultraschallwandler, wobei mit dem Ultraschallwandler Ultraschallsignale erzeugbar und/oder detektierbar sind und die Ultraschallsignale von dem Ultraschallwandler über ein Ultraschallfenster des Gehäuses emittierbar und/oder empfangbar sind, wobei zwischen dem Ultraschallwandler und dem Ultraschallfenster des Gehäuses eine dünne, relativ weiche Festkörper-Zwischenschicht vorgesehen ist.

Die eingangs beschriebenen Ultraschallsonden sind seit längerem bekannt und werden beispielsweise im Bereich der Verfahrenstechnik bei Ultraschalldurchflußmessem verwendet, wobei es im vorliegenden Fall nicht auf die Verwendung der Ultraschallsonde ankommt, die nachfolgend erläuterte Lehre der Erfindung kann vielmehr auf eine Vielzahl von unterschiedlichen Ultraschallsonden angewendet werden.

Bei den in Rede stehenden Ultraschallsonden kommt es entscheidend auf eine möglichst gute Verbindung zwischen dem Ultraschallwandler und dem Ultraschallfenster des Gehäuses an, wobei mit einer "möglichst guten" Verbindung gemeint ist, daß die von der Oberfläche des Ultraschallwandlers einerseits und der Oberfläche des Ultraschallfensters andererseits gebildete Kontaktfläche möglichst groß ist, so daß die von dem Ultraschallwandler ausgesendeten bzw. zu empfangenden Ultraschallsignale möglichst ungehindert die vorgenannte Kontaktfläche überschreiten können. Wenn die Kontaktfläche nur unzureichend ausgebildet ist und Lufteinschlüsse zwischen dem Ultraschallwandler und dem Ultraschallfenster vorhanden sind, ist die akustische Kopplung zwischen dem Ultraschallwandler und dem Ultraschallfenster eingeschränkt, da an den Grenzflächen zur Luft die Ultraschallsignale praktisch reflektiert werden und so nicht vom Ultraschallwandler zum Ultraschallfenster und umgekehrt übergehen können.

Aus dem Stand der Technik ist beispielsweise bekannt, den Ultraschallwandler und das Ultraschallfenster mit einem Klebstoff miteinander zu verkleben. Problematisch ist hier, daß die bekannten und verwendeten Klebstoffe häufig nur eine geringe Beständigkeit bei Wärmeeinwirkung haben und unter Wärmeeinwirkung u. a. ausgasen, mit der Folge, daß sich innerhalb des Klebstoffes Gaseinschlüsse mit ungewünschten Luft-Grenzflächen ausbilden; dies bringt den oben beschriebenen negativen Effekt für die Übertragungsfähigkeit von Ultraschallsignalen mit sich. Nachteilig ist außerdem, daß sich der Ultraschallwandler aufgrund der verminderten Festigkeit von Klebstoff bei Hitzeeinwirkung gänzlich von dem Ultraschallfenster bzw. dem Gehäuse lösen kann. Es hat sich ferner gezeigt, daß Klebstoffe auch bei sehr niedrigen Temperaturen - wie z. B. bei sogenannten kryogenen Anwendungen - ihre Wirkung verlieren, so daß Ultraschallsonden mit geklebtem Ultraschallwandler häufig nur in einem beschränkten Temperaturbereich von etwa - 40 °C bis ungefähr + 150 °C einsetzbar sind.

Aus dem Stand der Technik ist ebenfalls bekannt, eine feuchte Kopplung zwischen dem Ultraschallwandler und dem Ultraschallfenster des Gehäuses herzustellen, beispielsweise durch Verwendung von Flüssigkeiten auf Ölbasis. Für Hoch- und Niedrigtemperaturanwendungen gilt bei einer solchen Feuchtkopplung praktisch das Gleiche wie bei der zuvor genannten Klebverbindung. Die eingesetzten Flüssigkeiten sind instabil bei hohen Temperaturen - gasen beispielsweise aus - und verlieren ihre kontaktvermittelnde Wirkung bei sehr niedrigen Temperaturen.

Aus der DE 90 15 615 U1 ist eine Ultraschallsonde mit einem Ultraschallwandler und einer Vorlaufstrecke bekannt, die als Ultraschallfenster betrachtet werden kann. Zwischen dem Ultraschallwandler und dem Ultraschallfenster ist eine Festkörper-Zwischenschicht angeordnet. Zwischen dem Ultraschallfenster und der Festkörper-Zwischenschicht sowie zwischen der Festkörper-Zwischenschicht und dem Ultraschallwandler ist jeweils ein pastenförmiges Koppelmedium vorgesehen. Der Ultraschallwandler wird durch Tellerfedern mit einer Kraft beaufschlagt und gegen das Ultraschallfenster gedrückt.

Aus der DE 100 21 117 C1 ist z. B. bekannt, eine Ultraschallsonde auch für Hoch- und Niedrigtemperaturanwendungen verwendbar zu machen, indem der Ultraschallwandler durch einen Ultraschallwellenleiter thermisch isoliert wird und damit auch die Verbindungsstelle von Ultraschallwandler und Ultraschallwellenleiter. Die Verwendung eines Ultraschallwellenleiters bringt jedoch den Nachteil mit sich, daß bei der Ultraschallsonde eine zusätzliche Sig-nallaufzeit berücksichtigt werden muß, die eine zusätzliche Meßunsicherheit mit sich bringt. Insbesondere bei Niedrigtemperaturanwendungen kann es über den Ultraschallwellenleiter zu einem ungewünschten Wärmeeintrag in das Meßmedium kommen und dort zu Veränderungen des Mediums führen, die die Messung teils erheblich beeinflussen. Beispielsweise kann es bei dem Kontakt mit flüssigem Stickstoff, dessen Siedetemperatur unter Atmosphärendruck etwa - 196 °C beträgt, schnell zu einer Blasenbildung an dem dem Medium zugewandten Ende des Ultraschallfensters bzw. des Ultraschallwellenleiters kommen, wodurch die Übertragung des Ultraschallsignals wiederum erheblich vermindert wird.

Aufgabe der vorliegenden Erfindung ist es, die aufgezeigten Nachteile bei den bekannten Ultraschallsonden der hier in Rede stehenden Art - zumindest teilweise - zu vermeiden.

Die erfindungsgemäße Ultraschallsonde, bei der die zuvor hergeleitete und aufgezeigte Aufgabe gelöst ist, ist zunächst und im wesentlichen dadurch gekennzeichnet, daß die mit der Festkörper-Zwischenschicht in Kontakt stehende Oberfläche des Ultraschallfensters eine vorgegebene Rauheit aufweist und der Ultraschallwandler mit einer Kraft beaufschlagt ist, wobei die Materialien der Festkörper-Zwischenschicht und des Ultraschallfensters , die vorgegebene Rauheit der Oberfläche des Ultraschallfensters und die Kraft so aufeinander abgestimmt sind, daß die Festkörper-Zwischenschicht zumindest auch durch plastische Verformung an das Ultraschallfenster des Gehäuses angeschmiegt ist, wobei die Rauheit, nämlich das Vorkommen bestimmter Unebenheiten der Oberfläche des Ultraschallfensters, dazu führt, dass die spitzen Unebenheiten der Oberfläche des Ultraschallfensters bei einer vorgegebenen Kraft zu Spannungen in der Festkörper-Zwischenschicht führen, die oberhalb der Fließgrenze der relativ weichen Festkörper-Zwischenschicht liegen, so dass sich die relativ weiche Festkörper-Zwischenschicht durch plastische Verformung an die Unebenheiten des Ultraschallfensters anpassen kann, so dass die Festkörper-Zwischenschicht zumindest auch durch plastische Verformung an das Ultraschallfenster des Gehäuses angeschmiegt ist.

Allein durch die Tatsache, daß der Ultraschallwandler mit einer Kraft beaufschlagt ist, wird die dünne, relativ weiche Festkörper-Zwischenschicht als vermittelndes Medium zwischen dem Ultraschallwandler und der gehäuseinnenseitigen Oberfläche des Ultraschallfensters fixiert, so daß bei Wahl eines geeigneten Materials für die Festkörper-Zwischenschicht die bekannte Temperaturempfindlichkeit von Klebverbindungen oder auch von Flüssigkeitsverbindungen zwischen dem Ultraschallwandler und der Oberfläche des Ultraschallfensters vermieden wird. Durch diese Maßnahme alleine ist jedoch noch nicht garantiert, daß die sich zwischen der Festkörper-Zwischenschicht und der Oberfläche des Ultraschallfensters ausbildende Kontaktfläche tatsächlich möglichst groß ist und damit besonders gut zur Ultraschallübertragung geeignet ist, da die verbleibenden Festkörper-Luftflächen - also Übergänge von der Festkörper-Zwischenschicht zur Luft oder von der Oberfläche des Ultraschallfensters zur Luft - möglichst klein sind.

Nach aus dem Stand der Technik bekannten Erkenntnissen über die Ausbildung von Kontaktflächen zwischen zwei Grenzflächen, die aus verschiedenen Werkstoffen mit unterschiedlichen Materialeigenschaften (Elastizitätsmodul, Härte) und geometrischen Oberflächeneigenschaften (Rauheit) bestehen, läßt sich die Neigung, eine Kontaktfläche zwischen derartigen Materialien auszubilden z. B. durch die Plastizitäts-Kennzahl $\psi$ ausdrücken. Die Plastizitäts-Kennzahl $\psi$ läßt sich beispielsweise nach einem verbreiteten Modell für den Kontakt zwischen rauhen Oberflächen definieren durch:

$$\Psi = \frac{2E}{\pi K H} \cdot \sqrt{\frac{\sigma_s}{R}}.$$

In der oben aufgeführten Definition der Plastizitäts-Kennzahl $\psi$ ist E der Elastizitätsmodul, K die Härtekonstante, die ihrerseits von dem Poissonverhältnis des weicheren Materials abhängt, H entspricht der Härte des weicheren Materials, R bezeichnet den Krümmungsradius der Oberflächenunebenheiten und $\sigma_S$ bezeichnet die Standardabweichung der Oberflächenunebenheiten. Zur näheren Erläuterung des oben angegebenen Zusammenhangs wird beispielhaft verwiesen auf den Aufsatz von Kogut, L. et al.: "An improved elastic-plastic model for the contact of rough surfaces", 3rd Aimeter International Tribology Conference, 2002.

Die Plastizitäts-Kennzahl $\psi$ wird beschrieben durch einen ersten Term, der ausschließlich von Materialgrößen abhängig ist, nämlich den Parametern E, K und H, und durch einen zweiten Term, der ausschließlich abhängig ist von geometrischen Oberflächenkennzahlen, nämlich $\sigma_S$ und R. Die Kombination von Oberflächen, die aus Materialien mit bestimmten Materialkennzahlen gebildet werden und die bestimmte geometrische Oberflächenbeschaffenheiten aufweisen, zu einer Kontaktfläche beschreibt die Plastizitäts-Kennzahl $\psi$ dahingehend, daß sie das Verhältnis aus der erzielten Kontaktfläche zwischen den beiden Oberflächen bei einer bestimmten Kraft darstellt, mit der diese Flächen gegeneinander gedrückt werden.

Bei einer Oberflächenkombination mit einer kleinen Plastizitäts-Kennzahl $\psi$ steigt die erzielte Kontaktfläche bei einer Erhöhung der Kraft, mit der die Oberflächen aufeinandergedrückt werden, sehr stark an, wohingegen bei Oberflächenkombinationen mit einer größeren Plastizitäts-Kennzahl die tatsächliche Kontaktfläche zwischen den Oberflächen bei derselben Erhöhung der Kraft, mit der die Oberflächen gegeneinander gedrückt werden, nur geringer ansteigt. Für Werte der Plastizitäts-Kennzahl über 8 wird der Kontakt zwischen den Oberflächen vollständig plastisch und unabhängig von der Plastizitäts-Kennzahl.

Wenn dem oben beschriebenen Zusammenhang gefolgt wird, müßte zur Erzielung einer möglichst großen Kontaktfläche zwischen zwei Oberflächen - vorliegend also der Oberfläche der Festkörper-Zwischenschicht und des Ultraschallfensters - bei einer vorbestimmten - also zunächst frei wählbaren, dann aber festen - Kraft auf diese Oberflächen die Plastizitäts-Kennzahl möglichst klein eingestellt werden, also durch Wahl von Werkstoffen mit einem möglichst kleinen Elastizitätsmodul einerseits und möglichst großen Härten andererseits sowie mit einer möglichst kleinen Rauheit der Oberfläche, also mit einer möglichst geringen Standardabweichung der Oberflächenunebenheiten und mit einem möglichst großen Krümmungsradius der Oberflächenunebenheiten. Übertragen auf den hier betrachteten Fall müßte also die gehäuseinnenseitige Oberfläche des Ultraschallfensters möglichst glatt sein und das Material der Festkörper-Zwischenschicht eine möglichst geringe Elastizität aufweisen.

Gemäß der erfindungsgemäßen Lehre hat sich jedoch gezeigt, daß eine größere Kontaktfläche und damit eine bessere Fähigkeit zur Schallübertragung zwischen der Festkörper-Zwischenschicht und der Oberfläche des Ultraschallfenster realisierbar ist, wenn die geräteinnenseitige Oberfläche des Ultraschallfensters nicht eine möglichst geringe, sondern eine bestimmte vorgegebene Rauheit aufweist. Diese Rauheit, d. h. das Vorkommen bestimmter Unebenheiten der Oberfläche des Ultraschallfensters, das üblicherweise aus einem festeren Material gefertigt ist als die dünne, relativ weiche Festkörper-Zwischenschicht, führt dazu, daß die spitzen Unebenheiten der Oberfläche des Ultraschallfensters bei einer vorgegebenen Kraft zu Spannungen in der Festkörper-Zwischenschicht führen, die oberhalb der Fließgrenze der relativ weichen Festkörper-Zwischenschicht liegen, so daß sich die relativ weiche Festkörper-Zwischenschicht durch plastische Verformung an die Unebenheiten des Ultraschallfensters anpassen können, so daß die Festkörper-Zwischenschicht zumindest auch durch plastische Verformung an das Ultraschallfenster des Gehäuses angeschmiegt ist.

Die maximal auf den Ultraschallwandler ausübbare Kraft wird durch die Festigkeit des Materials des Ultraschallwandlers definiert; die maximal auf den Ultraschallwandler ausgeübte Kraft darf innerhalb des Ultraschallwandlers nur zu Spannungen führen, die unterhalb der Zerstörungsgrenze des für den Ultraschallwandler verwendeten Materials liegen, wobei der Ultraschallwandler üblicherweise aus einem Piezo-Kristall besteht. Bei vorgegebenen Materialien für die Festkörper-Zwischenschicht und das - üblicherweise härtere - Ultraschallfenster ist die Oberfläche des Ultraschallfensters mit einer Rauheit versehen, die nicht nach der aus dem Stand der Technik bekannten Lehre minimal, sondern erfindungsgemäß einen vorgegebenen, größeren Wert hat, der aber zu einer größeren Kontaktfläche zwischen der Festkörper-Zwischenschicht und der Oberfläche des Ultraschallfensters führt.

Gemäß einer weiteren bevorzugten Ausgestaltung der Erfindung ist die Plastizitäts-Kennzahl $\psi$ der Kontaktfläche zwischen dem Ultraschallwandler und dem Ultraschallfenster des Gehäuses möglichst klein, wobei dies insbesondere mit einer geringen Rauhigkeit der Oberfläche des Ultraschallfensters erzielt wird, insbesondere also durch eine kleine Standardabweichung und/oder aufgrund großer Krümmungsradien der Unebenheiten der Oberfläche des Ultraschallfensters. Hierbei ist jedoch zu beachten, daß die Rauheit nicht beliebig verringert werden kann, da erfindungsgemäß eine gewisse Mindest-Rauheit erhalten bleiben muß, um eine maximale Kontaktfläche und damit eine bestmögliche Ultraschallübertragung zu gewährleisten.

Gemäß einer weiteren bevorzugten Ausgestaltung der Erfindung ist die Kontaktfläche zwischen der Festkörper-Zwischenschicht und dem Ultraschallfenster des Gehäuses aufgrund der mit der vorgegebenen Kraftbeaufschlagung erzielten plastischen Verformung der Festkörper-Zwischenschicht möglichst groß, besonders bevorzugt insbesondere maximal. Hier wird nicht nur eine größere Kontaktfläche erzielt als dies bei einer Ausgestaltung der Oberflächen nach dem Stand der Technik möglich ist ("möglichst glatte" festere Oberfläche, "möglichst weiches" Gegenmaterial), sondern tatsächlich eine optimale Ausbildung der Kontaktfläche zwischen den beiden Oberflächen.

Nach einer weiteren, besonders vorteilhaften Ausgestaltung der Erfindung besteht die Festkörper-Zwischenschicht aus einem Material, das im Temperaturbereich zwischen zum Beispiel - 200 °C und + 300 °C im Aggregatzustand "fest" verbleibt, was einem Temperaturbereich entspricht, in dem bekannte Zwischenschichten aus Klebstoff oder Flüssigkeiten zwischen dem Ultraschallwandler und dem Ultraschallfenster des Gehäuses hinsichtlich der Übertragung von Ultraschallsignalen versagen. Es hat sich in diesem Zusammenhang als besonders vorteilhaft herausgestellt, wenn die Festkörper-Zwischenschicht aus einem Metall oder aus einer Metall-Legierung besteht, insbesondere aus Silber, Gold oder Platin, wobei Gold insgesamt gesehen zur Erzielung einer guten Kontaktfläche zur Übertragung von Ultraschallsignalen besonders geeignet ist.

Gemäß einer weiteren bevorzugten Ausgestaltung der Erfindung ist die Festkörper-Zwischenschicht in Ausbreitungsrichtung des Ultraschallsignals dünner als etwa ein Zehntel der Wellenlänge des zu übertragenden Ultraschallsignals, wodurch der Energieverlust durch Übertragung des Ultraschallsignals über die Festkörper-Zwischenschicht sehr gering ist und für die Signalübertragung insgesamt kaum ins Gewicht fällt.

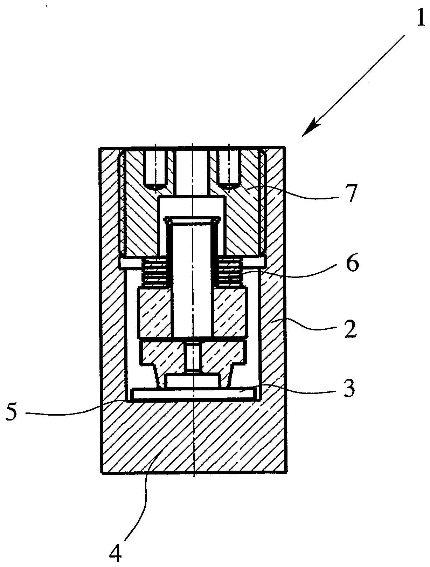

Im einzelnen gibt es nun verschiedene Möglichkeiten, die erfindungsgemäße Ultraschallsonde auszugestalten und weiterzubilden. Dazu wird verwiesen auf die dem Patentanspruch 1 nachgeordneten Patentansprüche und auf die Beschreibung eines bevorzugten Ausführungsbeispiels in Verbindung mit der Zeichnung.

Die einzige Figur der Zeichnung zeigt ein Ausführungsbeispiel der erfindungsgemäßen Ultraschallsonde 1 mit einem Gehäuse 2 und einem in dem Gehäuse 2 angeordneten Ultraschallwandler 3, wobei mit dem Ultraschallwandler 3 Ultraschallsignale erzeugbar und/oder detektierbar sind und die Ultraschallsignale von dem Ultraschallwandler 3 über ein Ultraschallfenster 4 des Gehäuses 2 emittierbar und/oder empfangbar sind. Bei dem Ultraschallfenster 4 des Gehäuses 2 handelt es sich lediglich um den Bereich des Gehäuses 2, über den die Ultraschallsignale von dem Gehäuse 2 in das angrenzende - hier nicht dargestellte - Medium übertragen werden. Das Ultraschallfenster muß nicht materialmäßig oder geometrisch in besonderer Weise ausgestaltet sein, sondern kann - wie in dem dargestellten Ausführungsbeispiel - einfach in der geometrischen Verbindungsstrecke zwischen dem Ultraschallwandler 3 und dem an das Gehäuse 2 angrenzenden Medium bestehen. Bei der dargestellten Ultraschallsonde 1 ist zwischen dem Ultraschallwandler 3 und dem Ultraschallfenster 4 des Gehäuses 2 eine dünne, relativ weiche Festkörper-Zwischenschicht 5 vorgesehen. Die mit der Festkörper-Zwischenschicht 5 in Kontakt stehende Oberfläche des Ultraschallfensters 4 weist eine vorgegebene Rauheit auf, und der Ultraschallwandler 3 ist mit einer Kraft beaufschlagt, so daß der Ultraschallwandler 3 die Festkörper-Zwischenschicht 5 gehäuseinnenseitig auf das Ultraschallfenster 4 preßt.

Die für das Ultraschallfenster 4 und die Festkörper-Zwischenschicht 5 verwendeten Materialien, die vorgegebene Rauheit der Oberfläche des Ultraschallfensters 4 und die Kraft, mit der der Ultraschallwandler 3 beaufschlagt ist, sind so aufeinander abgestimmt, daß die Festkörper-Zwischenschicht 5 zumindest auch durch plastische Verformung an das Ultraschallfenster 4 des Gehäuses 2 angeschmiegt ist.

Im Gegensatz zu aus dem Stand der Technik bekannten trockenen Verbindungen zwischen dem Ultraschallwandler 3 und dem Ultraschallfenster 4 ist die Rauheit der Oberfläche des Ultraschallfensters 4 nicht kleinstmöglich ausgestaltet, sondern ist mit einer vorgegebenen Rauheit versehen, die gewährleistet, daß bei der vorgegebenen Kraft, mit der der Ultraschallwandler 3 beaufschlagt ist, die Festkörper-Zwischenschicht 5 zumindest auch durch plastische Verformung an das Ultraschallfenster 4 des Gehäuses 2 angeschmiegt ist, wodurch eine größere Kontaktfläche zwischen dem Ultraschallwandler 3 und dem Ultraschallfenster 4 hergestellt werden kann als bei möglichst glatten Oberflächen des Ultraschallfensters 4 des Gehäuses 2. Dies ist darin begründet, daß eine gewisse Rauheit der Oberfläche des Ultraschallfensters 4 notwendig ist, um bei einer vorgegebenen Kraft eine mechanische Spannung innerhalb der Festkörper-Zwischenschicht 5 zu erzeugen, die oberhalb der Fließgrenze des Materials liegt, aus dem die Festkörper-Zwischenschicht 5 hergestellt ist.

Bei der dargestellten Ultraschallsonde 1 liegt die oben erläuterte Plastizitäts-Kennzahl $\psi$ der Kontaktfläche zwischen dem Ultraschallwandler 3 und dem Ultraschallfenster 4 des Gehäuses 2 bei etwa 1 und damit im Intervall [0...8].

In dem dargestellten Ausführungsbeispiel ist die Plastizitäts-Kennzahl $\psi$ der Kontaktfläche zwischen dem Ultraschallwandler 3 und dem Ultraschallfenster 4 des Gehäuses 2 möglichst klein ausgelegt worden, nämlich dadurch, daß die Standardabweichung $\sigma_S$ der Unebenheiten der Oberfläche des Ultraschallwandlers 3 möglichst gering gemacht worden ist, was bedeutet, daß die Höhen der Unebenheiten wertemäßig nah beieinander liegen und nur in einem kleinen Bereich voneinander abweichen. Bei anderen, hier nicht dargestellten Ausführungsbeispielen wird eine möglichst kleine Plastizitäts-Kennzahl $\psi$ dadurch erreicht, daß die Krümmungsradien R der Oberflächenunebenheiten des Ultraschallfensters 4 möglichst groß gemacht werden, wobei die Rauheit insgesamt nicht soweit abgesenkt werden darf, daß die Oberflächenunebenheiten nicht mehr in der Lage sind, die Festkörper-Zwischenschicht 5 jedenfalls auch plastisch zu verformen.

Bei der Wahl des Materials für die dünne, relativ weiche Festkörper-Zwischenschicht 5, der Rauheit der Oberfläche des Ultraschallfensters 4 und der Kraft, mit der der Ultraschallwandler 3 auf die Festkörper-Zwischenschicht 5 gepreßt wird, muß beachtet werden, daß die Kraft nicht zu einer Zerstörung des Ultraschallwandlers 3 führt, der in dem dargestellten Fall ein Piezo-Kristall ist. Ferner muß berücksichtigt werden, daß zwar eine möglichst geringe Plastizitäts-Kennzahl $\psi$ der Kontaktfläche zwischen dem Ultraschallwandler 3 und dem Ultraschallfenster 4 des Gehäuses 2 vorteilhaft ist, daß jedoch die Rauheit der Oberfläche des Ultraschallfensters 4 nicht soweit abgesenkt werden darf, daß eine plastische Verformung der weichen Festkörper-Zwischenschicht 5 - insbesondere im mikroskopischen Maßstab - nicht mehr möglich ist.

In dem dargestellten Ausführungsbeispiel besteht die Festkörper-Zwischenschicht 5 aus Gold, womit sichergestellt ist, daß die Festkörper-Zwischenschicht 5 im Temperaturbereich zwischen zum Beispiel - 200 °C und + 300 °C im Aggregatzustand "fest" verharrt, wobei Gold bekanntermaßen weit über 300 °C hinaus in diesem Aggregatzustand verbleibt. Durch die dargestellte Ausgestaltung der Ultraschallsonde 1 wird damit erreicht, daß eine größere Kontaktfläche zwischen dem Ultraschallwandler 3 und der Oberfläche des Ultraschallfensters 4 ausgebildet ist als bei bekannten Auslegungen der Kontaktfläche, wobei ferner die Nachteile der bekannten klebenden oder flüssigen Verbindungsschichten vermieden werden, genauso wie Meßungenauigkeiten, die mit der Verwendung von Ultraschallwellenleitern untrennbar verbunden sind.

Im dargestellten Ausführungsbeispiel ist darüber hinaus die Festkörper-Zwischenschicht 5 in Ausbreitungsrichtung des Ultraschallsignals dünner als ein Zehntel der Wellenlänge des zu übertragenden Ultraschallsignals, wodurch gewährleistet wird, daß der Energieverlust des zu übertragenden Ultraschallsignals nur sehr gering ist.

Bei der dargestellten Ultraschallsonde 1 wird die Kraft, mit der der Ultraschallwandler 3 beaufschlagt wird, von einem Federelement 6 erzeugt, wobei das Federelement 6 vorliegend aus einer Mehrzahl von Tellerfedern besteht. Durch diese Maßnahme wird auch eine gewisse Toleranz gegenüber thermischen Ausdehnungen der Gesamtanordnung erreicht. Das Federelement 6 ist in dem dargestellten Ausführungsbeispiel vorspannbar, nämlich durch ein in das Gehäuse 2 der Ultraschallsonde 1 einschraubbares Schraubelement 7, das auf das Federelement 6 drückt.

Bezugszeichenliste

1 Ultraschallsonde
2 Gehäuse
3 Ultraschallwandler
4 Ultraschallfenster
5 Festkörper-Zwischenschicht
6 Federelement

7     Schraubelement

**Patentansprüche**

1. Ultraschallsonde, insbesondere für einen Ultraschalldurchflußmesser, mit einem Gehäuse (2) und einem in dem Gehäuse (2) angeordneten Ultraschallwandler (3), wobei mit dem Ultraschallwandler (3) Ultraschallsignale erzeugbar und/oder detektierbar sind und die Ultraschallsignale von dem Ultraschallwandler (3) über ein Ultraschallfenster (4) des Gehäuses (2) emittierbar und/oder empfangbar sind, wobei zwischen dem Ultraschallwandler (3) und dem Ultraschallfenster (4) des Gehäuses (2) eine dünne, relativ weiche Festkörper-Zwischenschicht (5) vorgesehen ist, **dadurch gekennzeichnet, daß** die mit der Festkörper-Zwischenschicht (5) in Kontakt stehende Oberfläche des Ultraschallfensters (4) eine vorgegebene Rauheit aufweist und der Ultraschallwandler (3) mit einer Kraft beaufschlagt ist, wobei die Materialien der Festkörper-Zwischenschicht (5) und des Ultraschallfensters (4), die vorgegebene Rauheit der Oberfläche des Ultraschallfensters (4) und die Kraft so aufeinander abgestimmt sind, daß die Festkörper-Zwischenschicht (5) zumindest auch durch plastische Verformung an das Ultraschallfenster (4) des Gehäuses (2) angeschmiegt ist, wobei die Rauheit, nämlich das Vorkommen bestimmter Unebenheiten der Oberfläche des Ultraschallfensters, dazu führt, dass die spitzen Unebenheiten der Oberfläche des Ultraschallfensters bei einer vorgegebenen Kraft zu Spannungen in der Festkörper-Zwischenschicht führen, die oberhalb der Fließgrenze der relativ weichen Festkörper-Zwischenschicht liegen, so dass sich die relativ weiche Festkörper-Zwischenschicht durch plastische Verformung an die Unebenheiten des Ultraschallfensters anpassen kann, so dass die Festkörper-Zwischenschicht zumindest auch durch plastische Verformung an das Ultraschallfenster des Gehäuses angeschmiegt ist.

2. Ultraschallsonde nach Anspruch 1, **dadurch gekennzeichnet, daß** die Plastizitäts-Kennzahl ($\psi$) der Kontaktfläche möglichst klein ist, insbesondere aufgrund einer kleinen Standardabweichung $\sigma_S$ und/oder aufgrund großer Krümmungsradien (R) der Unebenheiten der Oberfläche des Ultraschallfensters (4).

3. Ultraschallsonde nach Anspruch 1 oder 2, **dadurch gekennzeichnet, daß** die Kontaktfläche zwischen der Festkörper-Zwischenschicht und dem Ultraschallfenster (4) des Gehäuses (2) aufgrund der plastischen Verformung der Festkörper-Zwischenschicht (5) möglichst groß, insbesondere maximal ist.

4. Ultraschallsonde nach einem der Ansprüche 1 bis 3, **dadurch gekennzeichnet, daß** die Festkörper-Zwischenschicht (5) im Temperaturbereich zwischen -200 °C und +300 °C im Aggregatzustand "fest" ist.

5. Ultraschallsonde nach einem der Ansprüche 1 bis 4, **dadurch gekennzeichnet, daß** die Festkörper-Zwischenschicht (5) aus einem Metall oder einer Metall-Legierung besteht, insbesondere aus Silber, Gold oder Platin.

6. Ultraschallsonde nach einem der Ansprüche 1 bis 5, **dadurch gekennzeichnet, daß** die Festkörper-Zwischenschicht (5) in Ausbreitungsrichtung des Ultraschallsignals dünner ist als ein Zehntel der Wellenlänge des zu übertragenden Ultraschallsignals.

7. Ultraschallsonde nach einem der Ansprüche 1 bis 6, **dadurch gekennzeichnet, daß** die Kraft (F) von einem Federelement (6) erzeugbar ist, wobei das Federelement (6) vorzugsweise aus einer Mehrzahl von Tellerfedern besteht.

8. Ultraschallsonde nach Anspruch 7, **dadurch gekennzeichnet, daß** das Federelement (6) vorspannbar ist, insbesondere durch ein in das Gehäuse (2) der Ultraschallsonde einschraubbares Schraubelement (7).

**Claims**

1. Ultrasonic probe, in particular for an ultrasonic flowmeter having a housing (2) and an ultrasonic transducer (3) arranged in the housing (2), wherein ultrasonic signals can be created and/or detected by the ultrasonic transducer (3) and the ultrasonic signals from the ultrasonic transducer (3) can be emitted and/or received via an ultrasonic window (4) of the housing (2), wherein a thin, relatively soft solid intermediate layer (5) is provided between the ultrasonic transducer (3) and the ultrasonic window (4) of the housing (2), **characterized in that** the surface of the ultrasonic window (4) which is in contact with the solid intermediate layer (5) has a predetermined roughness and a force is applied to the ultrasonic transducer (3), wherein the materials of the solid intermediate layer (5) and of the ultrasonic window (4), the predetermined roughness of the surface of the ultrasonic window (4) and the force are matched to one another in such a way that the solid intermediate layer (5) is nestled against the ultrasonic window (4) of the housing (2), at least by plastic deformation, wherein the roughness, namely the occurrence of certain unevennesses of the surface of the ultrasonic window, results in the spiky unevennesses of the surface of the ultrasonic window at a predetermined force leading to stresses in the solid intermediate layer which lie above the yield point of the relatively soft solid intermediate layer, so that the relatively soft solid intermediate layer can adapt to the unevennesses of the ultrasonic window by plastic deformation, so that the solid intermediate layer is nestled against the ultrasonic window of the housing at least also by plastic deformation.

2. Ultrasonic probe head according to claim 1, **characterized in that** the plasticity ratio ($\psi$) of the contact surface is as small as possible, in particular due to a small standard deviation $\sigma_S$ and/or due to large radii of curvature (R) of the unevennesses of the surface of the ultrasonic window (4).

3. Ultrasonic probe according to claim 1 or 2, **characterized in that** the contact surface between the intermediate solid layer and the ultrasonic window (4) of the housing (2) is as large as possible, in particular maximum, due to the plastic deformation of the intermediate solid layer (5).

4. Ultrasonic probe according to any one of claims 1 to 3, **characterized in that** the solid intermediate layer (5) is "solid" in the aggregate state in the temperature range between -200°C and +300°C.

5. Ultrasonic probe according to any one of claims 1 to 4, **characterized in that** the solid intermediate layer (5) consists of a metal or a metal alloy, in particular silver, gold or platinum.

6. Ultrasonic probe according to any one of claims 1 to 5, **characterized in that** the solid intermediate layer (5) is thinner in the direction of propagation of the ultrasonic signal than one tenth of the wavelength of the ultrasonic signal to be transmitted.

7. Ultrasonic probe according to any one of claims 1 to 6, **characterized in that** the force (F) can be generated by a spring element (6), wherein the spring element (6) preferably consists of a plurality of disc springs.

8. Ultrasonic probe according to claim 7, **characterized in that** the spring element (6) can be pretensioned, in particular by a screw element (7) which can be screwed into the housing (2) of the ultrasonic probe.

**Revendications**

1. Sonde à ultrasons, notamment pour un débitmètre à ultrasons, comprenant un boîtier (2) et un transducteur d'ultrasons (3) disposé dans le boîtier (2), des signaux ultrasonores pouvant être générés et/ou détectés par le transducteur d'ultrasons (3) et les signaux ultrasonores pouvant être émis et/ou reçus par le transducteur d'ultrasons (3) par le biais d'une fenêtre à ultrasons (4) du boîtier (2), une couche intermédiaire monolithique (5) mince relativement tendre se trouvant entre le transducteur d'ultrasons (3) et la fenêtre à ultrasons (4) du boîtier (2), **caractérisée en ce que** la surface de la fenêtre à ultrasons (4) qui est en contact avec la couche intermédiaire monolithique (5) présente une rugosité prédéfinie et le transducteur d'ultrasons (3) est soumis à une force, les matériaux de la couche intermédiaire monolithique (5) et de la fenêtre à ultrasons (4), la rugosité prédéfinie de la surface de la fenêtre à ultrasons (4) et la force étant accordés les uns aux autres de telle sorte que la couche intermédiaire monolithique (5) est plaquée contre la fenêtre à ultrasons (4) du boîtier (2) au moins aussi par déformation plastique, la rugosité, à savoir l'occurrence de certaines irrégularités de la surface de la fenêtre à ultrasons, ayant pour effet que les irrégularités pointues de la surface de la fenêtre à ultrasons, en présence d'une force prédéfinie, donnent lieu dans la couche intermédiaire monolithique à des tensions qui sont supérieures à la limite apparente d'élasticité de la couche intermédiaire monolithique relativement tendre, de sorte que la couche intermédiaire monolithique relativement tendre peut s'adapter par déformation plastique aux irrégularités de la fenêtre à ultrasons, de sorte que la couche intermédiaire monolithique est plaquée contre la fenêtre à ultrasons du boîtier au moins aussi par déformation plastique.

2. Sonde à ultrasons selon la revendication 1, **caractérisée en ce que** le coefficient de plasticité ($\psi$) de la surface de contact est le plus petit possible, notamment en raison d'un petit écart-type $\sigma_S$ et/ou en raison de grands rayons de courbure (R) des irrégularités de la surface de la fenêtre à ultrasons (4) .

3. Sonde à ultrasons selon la revendication 1 ou 2, **caractérisée en ce que** la surface de contact entre la couche intermédiaire monolithique et la fenêtre à ultrasons (4) du boîtier (2) est la plus grande possible, notamment maximale en raison de la déformation plastique de la couche intermédiaire monolithique (5).

4. Sonde à ultrasons selon l'une des revendications 1 à 3, **caractérisée en ce que** la couche intermédiaire monolithique (5) se trouve dans l'état physique « solide » dans la plage de températures entre -200 °C et +300 °C.

**5.** Sonde à ultrasons selon l'une des revendications 1 à 4, **caractérisée en ce que** la couche intermédiaire monolithique (5) se compose d'un métal ou d'un alliage métallique, notamment d'argent, d'or ou de platine.

**6.** Sonde à ultrasons selon l'une des revendications 1 à 5, **caractérisée en ce que** la couche intermédiaire monolithique (5), dans le sens de propagation du signal ultrasonore, est plus mince qu'un dixième de la longueur d'onde du signal ultrasonore à transmettre.

**7.** Sonde à ultrasons selon l'une des revendications 1 à 6, **caractérisée en ce que** la force (F) peut être générée par un élément ressort (6), l'élément ressort (6) se composant de préférence d'une pluralité de ressorts à disque.

**8.** Sonde à ultrasons selon la revendication 7, **caractérisée en ce que** l'élément ressort (6) peut être précontraint, notamment par un élément à visser (7) qui peut être vissé dans le boîtier (2) de la sonde à ultrasons.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 9015615 U1

- DE 10021117 C1

**In der Beschreibung aufgeführte Nicht-Patentliteratur**

- **KOGUT, L. et al.** An improved elastic-plastic model for the contact of rough surfaces. *3rd Aimeter International Tribology Conference,* 2002